# EUROPÄISCHE PATENTSCHRIFT

(11) **EP 3 345 813 B1**
(45) Veröffentlichungstag und Bekanntmachung des Hinweises auf die Patenterteilung: **07.08.2019**
(21) Anmeldenummer: 17150639.7
(22) Anmeldetag: 09.01.2017
(51) Int. Cl.: B62D 65/18

(54) **FAHRZEUGMONTAGEEINRICHTUNG**
VEHICLE ASSEMBLY DEVICE
DISPOSITIF D'ASSEMBLAGE DE VÉHICULE

(43) Veröffentlichungstag der Anmeldung: 11.07.2018
(73) Patentinhaber: MAGNA STEYR Fahrzeugtechnik AG & Co KG, 8041 Graz (AT)
(72) Erfinder: WOLFSBERGER, Günter, 8501 Lieboch (AT)
(74) Vertreter: Zangger, Bernd

(56) Entgegenhaltungen:
- EP-A1- 2 589 526
- US-A- 5 864 995
- US-A- 6 112 878

## Beschreibung

### Gebiet der Erfindung

Die vorliegende Erfindung betrifft eine Fahrzeugmontageeinrichtung, umfassend eine Förderbahn, wobei die Förderbahn zum Transport von Teilfahrzeugen ausgelegt ist und entlang der Förderbahn Stationen zur Vervollständigung der Teilfahrzeuge angeordnet sind.

### Stand der Technik

Es ist schon seit längerem bekannt, dass die Produktivität bei der Montage von Fahrzeugen, insbesondere von Automobilen, durch Verwendung von Fließbändern und ähnlichen Teilfahrzeug-Förderbahnen erheblich gesteigert werden kann.

Dabei werden einzelne unvollständige Fahrzeuge mit Hilfe der Förderbahnen von einer Station in die nächste Station bewegt und innerhalb der Stationen Teile bzw. Module an das bereits montierte Teilfahrzeug befestigt.

Beispielsweise offenbart die DE 31 46 807 A1 ein solches Fördersystem das Hängeförderer verwendet, an welchen eine Kraftfahrzeugkarosserie zum Transport aufgehängt sein kann.

Ein ähnliches Hängebandsystem ist auch aus der US 2003/000413 A1 bekannt.

Ein Fördersystem bei dem für jedes Kraftfahrzeug eine fahrbare Plattform vorgesehen ist, ist beispielsweise aus der DE 10 2005 062 691 A1 bekannt.

Die US 6 112 878 A offenbart eine Automobilfertigungslinie, die eine erste Montagelinie, eine zweite Montagelinie, die auf einer Seite parallel zu der ersten Montagelinie angeordnet ist, und eine dritte Montagelinie aufweist, die auf der anderen Seite der ersten Montagelinie parallel angeordnet ist. Ein erster Förderer ist zwischen der ersten und der zweiten Montagelinie angeordnet, um Werkstücke von dem Ende der ersten Montagelinie zu dem Anfang der zweiten Montagelinie zu tragen, und ein zweiter Förderer ist zwischen der zweiten Montagelinie und der dritten Montagelinie angeordnet zum Tragen von Werkstücken vom Ende der zweiten Montagelinie bis zum Beginn der dritten Montagelinie. Die erste Montagelinie, der erste Förderer, die zweite Montagelinie, der zweite Förderer und die dritte Montagelinie sind im Wesentlichen spiralförmig angeordnet.

Bei den bekannten Fahrzeugmontageeinrichtungen für Fahrzeuge die Fördersysteme für die Fahrzeuge umfassen ist jedoch nachteilig dass lange Wege zum An- und Abtransport der zu verbauenden Teile zu überwinden sind und daher die Montage der Fahrzeuge kostspielig ist.

### Zusammenfassung der Erfindung

Es ist eine Aufgabe der Erfindung, eine Fahrzeugmontageeinrichtung anzugeben die eine kostengünstige Montage von Fahrzeugen ermöglicht, insbesondere durch kurze Wege für die zu verwendenden Bauteile.

Die Lösung der Aufgabe erfolgt durch eine Fahrzeugmontageeinrichtung, umfassend eine Förderbahn, wobei die Förderbahn zum Transport von Teilfahrzeugen ausgelegt ist und entlang der Förderbahn Stationen zur Vervollständigung der Teilfahrzeuge angeordnet sind, wobei die Förderbahn eine Spiralform aufweist, wobei die Förderbahn als dreidimensionale Spirale ausgebildet ist, so dass Stationen nicht nur in der Fläche der Montagehalle zueinander benachbart sind, sondern auch vertikal über- und untereinander liegen.

Erfindungsgemäß wird eine Förderbahn, zum Transport von Teilfahrzeugen während der Assemblierung des Fahrzeuges, als dreidimensionale Spirale ausgebildet und somit vorteilhaft die vertikale Dimension genutzt um die Wege zu den einzelnen Arbeitsstationen zu verkürzen. Durch die Ausbildung in Form einer Spirale sind Stationen nicht nur in der Fläche der Montagehalle zueinander benachbart, sondern liegen auch vertikal über- und untereinander und wird somit ein einfacherer, kürzerer Transport von Teilen von einer Station zur nächsten ermöglicht.

Ein Vorteil der erfindungsgemäßen Spiralform liegt darin, dass die gesamte externe Logistik, das heißt die Zulieferung von Einzelteilen oder bereits vormontierten Teilzusammenbauten über beispielsweise Container oder LKW direkt von außen an die Fahrzeugmontageeinrichtung andocken kann, wobei hierdurch eine besonders effiziente Ausnutzung des vorhanden Raumes erfolgt und eine sehr hohe Frequenz der Zulieferung von Teilen sowie zielgenaue Zulieferung zum konkreten Produktionsablauf möglich ist. Vorteilhaft ist ebenso, dass nur sehr wenig Grundfläche zur Ausführung der gesamten Fahrzeugproduktion erforderlich ist.

Die Förderbahn kann dabei insbesondere ähnlich einem Förderband so ausgebildet sein, dass die Teilfahrzeuge auf der Förderbahn getragen werden und/oder auch als Hängebahn ausgebildet sein, so dass die Teilfahrzeuge an der Förderbahn hängen.

Die Förderbahn kann insbesondere eine Stahlbaukonstruktion sein.

Die Fahrzeugmontageeinrichtung dient vorzugsweise der Produktion von ganzen Fahrzeugen, also zur kompletten Montage bis zur Fertigstellung der Fahrzeuge. Sie kann jedoch auch zur Produktion einzelner Komponenten von Fahrzeugen ausgelegt sein.

Vorzugsweise umfasst die Förderbahn mindestens zwei, bevorzugt mindestens drei, besonders bevorzugt mindestens vier oder mehr vollständige Spiralebenen, die vorzugsweise vertikal übereinander angeordnet und vorzugsweise modular reduzier- und erweiterbar sind. Vorzugsweise umfasst die Förderbahn mindestens so viel Spiralwindungen/-ebenen, wie für die Montage der Fahrzeugkomponente bzw. des gesamten Fahrzeuges notwendig sind. Somit wird den Montagebedingungen flexibel Rechnung getragen. Die Bauteile der Spirale können alle gleich sein. Eine Gesamtspirale besteht aus einer Anzahl von Elementen oder Spiralwindungen/- ebenen, die übereinander angeordnet und verbunden, vorzugsweise zusammengesteckt, geschraubt, geschweißt etc., werden können, und am Ende einen Spiralturm entsprechender Höhe ergeben, der der Komplexität der jeweiligen Montagearbeiten entspricht. Hierbei könnte ein, insbesondere vorgefertigtes, Element beispielsweise einer Spiralwindung bzw. Spiralebene entsprechen oder auch nur einen Teil einer Spiralwindung darstellen. Die Förderbahn kann daher als modulares mehrteiliges System ausgeführt sein, dessen Elemente zum Zusammenstecken, Zusammenschrauben und/oder Zusammenschweißen ausgebildet sind.

Die Förderbahn kann zumindest eine aber auch zwei oder mehrere Fahrzeugspuren nebeneinander aufweisen, so dass ein Fahrzeug in einer Spur ein anderes Fahrzeug in einer anderen Spur "überholen" kann. Beispielsweise kann dadurch eine Montagestation ausgelassen oder dupliziert werden.

Vorzugsweise ist die Förderbahn dazu ausgebildet, die Fahrzeuge entlang der Spirale von oben nach unten zu transportieren. Durch Ausnutzung der Schwerkraft kann somit auch weniger Energie nötig sein um die Fahrzeuge zu bewegen.

Bevorzugt ist am oberen Eingang der Förderbahn eine Vorrichtung angeordnet zum Übergeben von, vorzugsweise bereits lackierten, Karosserien und/oder von Antriebssträngen von Fahrzeugen an die Förderbahn. Diese Karosserien und/oder Antriebsstränge können als Basis dienen um weitere Fahrzeugteile oder Module daran zu befestigen.

Seitlich neben der Förderbahn, das heißt außen oder innen an der Spirale, kann mindestens ein Hebezeug bzw. eine Hebevorrichtung, beispielsweise mindestens ein Hubtisch, als Zuführeinheit für zu verbauende Bauteile angeordnet sein, dessen Tisch bzw. dessen hebbarer Tragteil auf mehrere, zumindest zwei, bevorzugt alle Spiralebenen der Förderbahn, insbesondere zu den dort befindlichen Stationen zur Vervollständigung der Teilfahrzeuge, hebbar ist. Bevorzugt sind mehrerer solcher Hebezeuge bzw. Hebevorrichtungen, beispielsweise Hubtische, an der Förderbahn angeordnet, vorzugsweise radial und in unterschiedlichen Höhen, so dass mehrere umfänglich und in den Ebenen verteilte Stationen zur Montage von Bauteilen über die Hubtische erreichbar sind. Zumindest zwei Stationen, bevorzugt zumindest drei Stationen, können in ungefähr derselben horizontalen Position vertikal untereinander angeordnet sein.

Insbesondere können die Hebezeuge bzw. Hebevorrichtungen, insbesondere Hubtische, zum Heben und Senken von Containern ausgebildet sein.

Dadurch können Bauteile zur Montage direkt aus Liefercontainern entnommen werden. Anlieferwege und Anlieferfahrzeuge, wie Hubstapler, können somit eingespart werden.

Die Hubtische können insbesondere als Scherenhubtische ausgeführt sein oder als Hebeplattform/Lift zur Beförderung von Containern. Die Hebezeuge bzw. Hebevorrichtungen können auch als Containerlifte ausgeführt sein.

Möglich ist auch, dass die Hebezeuge bzw. Hebevorrichtungen nur den bzw. die Container heben und mit diesem direkt verbunden sind, sodass ein Hubtisch oder eine Hebeplattform als vom Container getrenntes Tragteil entfallen kann.

Die Hebevorrichtung kann an einem Boden aber auch oben, beispielsweise im Bereich einer Tragestruktur nahe einer Hallendecke, montiert sein.

Es können beispielsweise Zuführeinheiten für Submodule an den Montage-Stationen vorhanden sein, die fertige Submodule von Submodul-Zusammenbau-Arbeitsplätzen zur Förderbahn transportieren.

In den einzelnen Stationen werden jeweils Bauteile, insbesondere Submodule, an das Teilfahrzeug montiert.

Am unteren Ausgang der Förderbahn ist bevorzugt eine Station zum Endtest der Fahrzeuge angeordnet, ein sogenanntes "End-of-Line Testing", und darauf folgend eine Fahrbahn zur Abfahrt der fertig montierten Fahrzeuge oder eine direkte Verladung auf Schienenfahrzeuge oder straßentaugliche Transporteinrichtungen.

Im Bereich um die Mittelachse der Förderbahn bzw. im Kern der Förderbahn kann in zumindest einer, bevorzugt in mehreren Spiralebenen ein Administrationsraum, insbesondere mit zumindest einem Schreibtisch, und/oder zumindest ein Sozialraum und / oder zumindest ein Sanitärraum und / oder zumindest ein Raum für IT bzw. ein IT System und / oder Verteiler für Datenleitungen und / oder Datenleitungen und /oder elektrische Leitungen und Verteiler untergebracht sein, um den Raum im Zentrum der Spirale zu nutzen.

Es ist auch möglich, dass die Fahrzeugmontageeinrichtung nebeneinander oder übereinander zumindest zwei spiralförmige Förderbahnen aufweist, die bevorzugt miteinander gekoppelt sind, aber bevorzugt auch unabhängig voneinander agieren können. Insbesondere wenn zwei Spiralen übereinander angeordnet sind, wird die Koppelung bevorzugt eine mechanische Verbindung der Förderbahnen umfassen. Insbesondere wenn die Förderbahnen nebeneinander angeordnet sind, kann die Koppelung beispielsweise auch über gemeinsame, verbindende Arbeitsstationen erfolgen.

### Kurzbeschreibung der Zeichnungen

Die Erfindung wird im Folgenden beispielhaft unter Bezugnahme auf die Zeichnungen beschrieben.
- Fig.: ist eine dreidimensionale schematische Darstellung einer erfindungsgemäßen Fahrzeugmontageeinrichtung.

### Detaillierte Beschreibung der Erfindung

In Fig. ist eine erfindungsgemäße Fahrzeugmontageeinrichtung dargestellt, mit einer Förderbahn 1, wobei die Förderbahn 1 zum Transport von Teilfahrzeugen 2 ausgelegt ist und entlang der Förderbahn 1 Stationen 3 zur Vervollständigung der Teilfahrzeuge 2 angeordnet sind, wobei die Förderbahn 1 eine Spiralform aufweist.

Die Förderbahn 1 umfasst dreieinhalb Spiralebenen, also drei vollständige Spiralebenen und ist so ausgebildet, dass die Teilfahrzeuge 2 entlang der Spirale von oben nach unten transportiert werden, in der durch die Pfeile in der Förderbahn 1 angezeigten Richtung.

Am oberen Eingang der Förderbahn 1 ist, im Bereich des obersten Pfeiles der den Eingang der Förderbahn markiert, eine Vorrichtung angeordnet (nicht dargestellt) zum Übergeben von bereits lackierten Karosserien 2 und von Antriebssträngen (nicht dargestellt) von Fahrzeugen an die Förderbahn 1.

Während die Teilfahrzeuge 2 auf der Förderbahn 1 von oben nach unten transportiert werden gelangen sie von einer Station 3, in der Bauteile am Teilfahrzeug 2 ergänzt werden, in die nächste Station 3. Es können mehrere Stationen 3 in einer Spiralebene angeordnet sein, wie in der obersten Ebene dargestellt und können Stationen 3 in mehreren, vorzugsweise in allen Spiralebenen der Förderbahn 1 angeordnet sein. Stationen 3 können sich vertikal ober- und untereinander in verschiedenen Spiralebenen befinden.

Seitlich, außen neben der Förderbahn 1 ist ein Hebezeug bzw. eine Hebevorrichtung, nämlich ein Hubtisch 4, angeordnet, dessen habbarer Tragteil, insbesondere Tisch oder andere Plattform bzw. direkt habbarer Container, auf alle Spiralebenen der Förderbahn 1, nämlich zu Stationen 3 zur Vervollständigung der Teilfahrzeuge 2, hebbar ist. In der Fig. sind drei mögliche Positionen des Containers bzw. Tisches eines Hubtisches eingezeichnet. Der Hubtisch 4 ist beispielsweise ein Scherenhubtisch und kann Container mit Anbauteilen direkt in die Stationen 3 heben, um Fahrzeugteile für die Montage bereit zu stellen. Es können natürlich auch mehrere Hebezeuge bzw. Hebevorrichtungen, insbesondere Hubtische 4, verwendet werden, sowie auch andere Zuführeinheiten 8 zu den Stationen 3 vorgesehen sein, die nicht zwischen den Ebenen verfahrbar sind.

Am unteren Ausgang der Förderbahn 1 ist eine Endtest Station 7 zur finalen Kontrolle der hergestellten Fahrzeuge und danach eine Fahrbahn 5 zur Abfahrt der fertig montierten Fahrzeuge ausgebildet, die beispielsweise durch einen dafür vorgesehenen Bereich des Bodens der Montagehalle gebildet sein kann, und/ oder direkt ein Schienenfahrzeug beaufschlagt oder ein straßentaugliches Transportmittel bedient.

Um die Mittelachse der Förderbahn 1 ist in allen Spiralebenen jeweils ein Administrationsraum 6, beispielsweise ein Bildschirmarbeitsplatz, ein Büro oder ein Serverraum angeordnet.

### Bezugszeichenliste

- 1: Förderbahn
- 2: Teilfahrzeug
- 3: Station
- 4: Hubtisch
- 5: Fahrbahn
- 6: Administrationsraum
- 7: Endtest-Station
- 8: Zuführeinheit

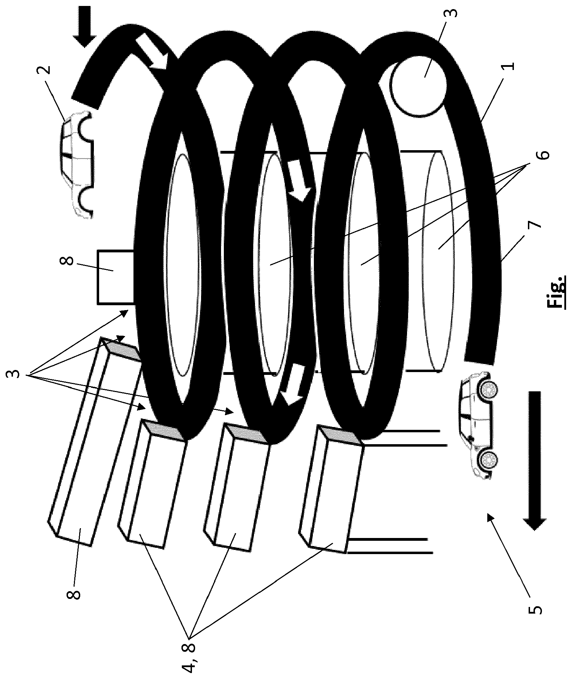

## Patentansprüche

1. Fahrzeugmontageeinrichtung, umfassend eine Förderbahn (1), wobei die Förderbahn (1) zum Transport von Teilfahrzeugen (2) ausgelegt ist und entlang der Förderbahn (1) Stationen (3) zur Vervollständigung der Teilfahrzeuge (2) angeordnet sind,
wobei die Förderbahn (1) eine Spiralform aufweist,
**dadurch gekennzeichnet, dass** die Förderbahn (1) als dreidimensionale Spirale ausgebildet ist, so dass Stationen (3) nicht nur in der Fläche der Montagehalle zueinander benachbart sind, sondern auch vertikal über- und untereinander liegen.

2. Fahrzeugmontageeinrichtung nach Anspruch 1,
**dadurch gekennzeichnet, dass** die Förderbahn (1) mindestens zwei, bevorzugt mindestens drei oder mindestens vier vollständige Spiralebenen umfasst.

3. Fahrzeugmontageeinrichtung nach zumindest einem der vorhergehenden Ansprüche,
**dadurch gekennzeichnet, dass** die Förderbahn (1) als modulares mehrteiliges System ausgeführt ist, so dass Teile der Förderbahn (1), insbesondere einzelne Spiralebenen, zusammensteckbar sind.

4. Fahrzeugmontageeinrichtung nach zumindest einem der vorhergehenden Ansprüche,
**dadurch gekennzeichnet, dass** die Förderbahn (1) zumindest zwei Fahrzeugspuren nebeneinander aufweist.

5. Fahrzeugmontageeinrichtung nach zumindest einem der vorhergehenden Ansprüche,
**dadurch gekennzeichnet, dass** die Förderbahn (1) dazu ausgebildet ist, die Teilfahrzeuge (2) entlang der Spirale von oben nach unten zu transportieren.

6. Fahrzeugmontageeinrichtung nach Anspruch 5,
**dadurch gekennzeichnet, dass** am oberen Eingang der Förderbahn (1) eine Vorrichtung angeordnet ist zum Übergeben von Karosserien und/oder von Antriebssträngen von Fahrzeugen an die Förderbahn.

7. Fahrzeugmontageeinrichtung nach zumindest einem der vorhergehenden Ansprüche,
**dadurch gekennzeichnet, dass** seitlich neben der Förderbahn (1) mindestens eine Hebevorrichtung angeordnet ist, insbesondere mindestens ein Hubtisch (4), dessen hebbarer Tragteil, insbesondere Tisch, auf mehrere Spiralebenen der Förderbahn (1), insbesondere zu den Stationen (3) zur Vervollständigung der Teilfahrzeuge (2), hebbar ist.

8. Fahrzeugmontageeinrichtung nach Anspruch 5 oder 6,
**dadurch gekennzeichnet, dass** am unteren Ausgang der Förderbahn (1) eine Fahrbahn (5) zur Abfahrt der fertig montierten Fahrzeuge und/oder eine direkte Verladung auf Schienenfahrzeuge oder straßentaugliche Transporteinrichtungen ausgebildet ist.

9. Fahrzeugmontageeinrichtung nach zumindest einem der vorhergehenden Ansprüche,
**dadurch gekennzeichnet, dass** um die Mittelachse und/oder im Kern der Förderbahn (1) in zumindest einer Spiralebene ein Administrationsraum (6) und/oder ein IT System und/oder Datenleitungen und /oder elektrische Leitungen und/oder elektrische Verteiler angeordnet sind.

10. Fahrzeugmontageeinrichtung nach zumindest einem der vorhergehenden Ansprüche,
**dadurch gekennzeichnet, dass** die Fahrzeugmontageeinrichtung nebeneinander oder übereinander zumindest zwei spiralförmige Förderbahnen (1) aufweist, die bevorzugt miteinander gekoppelt sind.

## Claims

1. Vehicle assembly device comprising a conveyor track (1), wherein the conveyor track (1) is configured to transport part-vehicles (2) and stations (3) for completing the part-vehicles (2) are arranged along the conveyor track (1),
wherein the conveyor track (1) has a helical shape,
**characterized in that** the conveyor track (1) is constructed as a three-dimensional helix, such that stations (3) are not only adjacent to each other in the surface of the assembly hall, but are also located vertically above and below each other.

2. Vehicle assembly device according to Claim 1,
**characterised in that** the conveyor track (1) comprises at least two, preferably at least three or at least four, complete helix planes.

3. Vehicle assembly device according to at least one of the preceding claims,
**characterised in that** the conveyor track (1) is constructed as a modular multi-component system so that components of the conveyor track (1), in particular individual helix planes, can be assembled.

4. Vehicle assembly device according to at least one of the preceding claims,
**characterised in that** the conveyor track (1) has at least two vehicle lanes beside each other.

5. Vehicle assembly device according to at least one of the preceding claims,
**characterised in that** the conveyor track (1) is constructed to transport the part-vehicles (2) along the helix from top to bottom.

6. Vehicle assembly device according to Claim 5,
**characterised in that** at the upper input of the conveyor track (1) a device is arranged for transferring bodyworks and/or drive trains of vehicles to the conveyor track.

7. Vehicle assembly device according to at least one of the preceding claims,
**characterised in that** laterally beside the conveyor track (1) at least one lifting device is arranged, in particular at least one lifting table (4), and the liftable carrier portion thereof, in particular the table, can be lifted to a plurality of helix planes of the conveyor track (1), in particular to the stations (3) in order to complete the part-vehicles (2).

8. Vehicle assembly device according to Claim 5 or 6,
**characterised in that** there is formed at the lower output of the conveyor track (1) a travel track (5) for driving away the completely assembled vehicles and/or direct loading onto rail vehicles or roadworthy transport devices.

9. Vehicle assembly device according to at least one of the preceding claims,
**characterised in that** around the centre axis and/or in the middle of the conveyor track (1) in at least one helix plane an administration space (6) and/or an IT system and/or data lines and/or electrical lines and/or electrical distributors are arranged.

10. Vehicle assembly device according to at least one of the preceding claims,
**characterised in that** the vehicle assembly device has beside each other or one above the other at least two helical conveyor tracks (1) which are preferably coupled to each other.

## Revendications

1. Dispositif d'assemblage de véhicule, comprenant un chemin de transport (1), dans lequel le chemin de transport (1) est conçu pour le transport de véhicules partiels (2) et des stations (3) destinées à compléter les véhicules partiels (2) sont disposées le long du chemin de transport (1), dans lequel le chemin de transport (1) présente une forme en spirale, **caractérisé en ce que** le chemin de transport (1) est formé par une spirale tridimensionnelle, de telle manière que des stations (3) soient proches l'une de l'autre non seulement dans la surface de sol du hall d'assemblage mais aussi soient situées verticalement les unes au-dessus et en dessous des autres.

2. Dispositif d'assemblage de véhicule selon la revendication 1, **caractérisé en ce que** le chemin de transport (1) comprend au moins deux, de préférence au moins trois ou au moins quatre plans de spirale complets.

3. Dispositif d'assemblage de véhicule selon au moins une des revendications précédentes, **caractérisé en ce que** le chemin de transport (1) est formé par un système modulaire en plusieurs parties, de telle manière que des parties du chemin de transport (1), en particulier des plans de spirale, puissent être assemblées par embrochage.

4. Dispositif d'assemblage de véhicule selon au moins une des revendications précédentes, **caractérisé en ce que** le chemin de transport (1) présente au moins deux lignes de véhicules l'une à côté de l'autre.

5. Dispositif d'assemblage de véhicule selon au moins une des revendications précédentes, **caractérisé en ce que** le chemin de transport (1) est configuré pour transporter les véhicules partiels (2) de haut en bas le long de la spirale.

6. Dispositif d'assemblage de véhicule selon la revendication 5, **caractérisé en ce qu'**un dispositif est agencé à l'entrée supérieure du chemin de transport (1) pour transférer des carrosseries et/ou des chaînes cinématiques de véhicules au chemin de transport.

7. Dispositif d'assemblage de véhicule selon au moins une des revendications précédentes, **caractérisé en ce qu'**au moins un dispositif de levage est disposé latéralement à côté du chemin de transport (1), en particulier au moins une table élévatrice (4), dont la partie élévatrice portante, en particulier la table, peut être élevée sur plusieurs plans de spirale du chemin de transport (1), en particulier jusqu'aux stations (3) pour compléter les véhicules partiels (2).

8. Dispositif d'assemblage de véhicule selon une revendication 5 ou 6, **caractérisé en ce qu'**une chaussée (5) est aménagée à la sortie inférieure du chemin de transport (1), pour l'évacuation des véhicules assemblés terminés et/ou pour un chargement directement sur des véhicules ferroviaires ou des dispositifs de transport routiers.

9. Dispositif d'assemblage de véhicule selon au moins une des revendications précédentes, **caractérisé en ce qu'**un local administratif (6) et/ou un système IT et/ou des lignes de données et/ou des câbles électriques et/ou des distributeurs électriques sont disposés autour de l'axe central et/ou au coeur du chemin de transport (1) dans au moins un plan de spirale.

10. Dispositif d'assemblage de véhicule selon au moins une des revendications précédentes, **caractérisé en ce que** le dispositif d'assemblage de véhicule présente au moins deux chemins de transport en forme de spirale (1), l'un à côté de l'autre ou l'un au-dessus de l'autre, qui sont de préférence couplés l'un à l'autre.
